# EUROPEAN PATENT SPECIFICATION

(11) **EP 4 531 552 B1**
(45) Date of publication and mention of the grant of the patent: **01.07.2026**
(21) Application number: 23729870.8
(22) Date of filing: 26.05.2023
(51) Int. Cl.: A01K 61/95

(54) **APPARATUS FOR DIRECTIONAL ORIENTATION AND SINGULARIZING OF LIVE FISH**
VORRICHTUNG ZUM DIREKTIONELLEN ORIENTIEREN UND ZUM VEREINZELN VON LEBENDIGE FISCHE
APPAREIL POUR L'ORIENTATION DIRECTIONNELLE ET LA SÉPARATION DE POISSONS VIVANTS

(30) Priority: 27.05.2022 NO 20220619
(43) Date of publication of application: 09.04.2025
(73) Proprietor: LUMIC AS, 5347 Ågotnes (NO)
(72) Inventor: STRØMME, Hans-Magne, 5357 Fjell (NO); GLESNES, Kåre, 5366 Misje (NO)
(74) Representative: Acapo Onsagers AS
(86) International application number: PCT/NO2023/050124
(87) International publication number: WO 2023/229470

(56) References cited:
- WO-A1-2014/184766
- FR-A5- 2 135 770
- NO-A1- 20 130 687

## Description

### Field of the invention

The invention relates to an apparatus for directional orientation and singularizing of live fish, prior to treatment, handling and/or processing of the fish.

### Background of the invention.

In fish farming or in the production of juvenile fish for fish farming the fish will need to go through various processes for handling and/or treatment, such as vaccination de-licing etc. Fish which has reached its full size requires to go through several process steps before it ends up in the fridge in the supermarket.

Before each of these handlings and/or treatments or process steps the fish usually must be singularized (the fish need to be supplied to these steps one at the time) and often they need to arrive in a particular orientation (for instant head first).

### Prior art:

NO345372B1 discloses a system for sorting of living fish, comprising an inflow section, with an upstream end receiving fish and water, a gully and two receiving sections. The gully is arranged crosswise at a downstream end of the inflow section, a first receiving section is arranged downstream of the gully for receiving fish passing over the gully, and a second receiving section is arranged below the gully receiving fish entering through the gully.

BR202018009149U2 relates to a fish counter.

FR2135770A5 discloses an apparatus for detecting, weighing and counting fish.

WO2014/184766A1 discloses a cleaning system for removing multicellular ectoparasites from fish.

### Objects of the present invention

It is an object of the invention to provide an apparatus and a process, which is used prior to and/or during treatment and/or processing of live fish, in where the fish is orientated in a particular direction in the apparatus and in where the fish is singularized and forwarded one by one to said further treatment, handling and/or processing.

The further treatment, handling and/or processing can for instance be with anesthetics or disease induced treatment of smolt and/or larger fish. Other examples can be lice treatment, bath/immersion vaccination, etc.

### Summary of the invention

*The invention relates to an apparatus* according to claim 1 *for directional orientation and singularizing of live fish, prior to treatment, handling and*/*or processing of the fish. The apparatus comprises:*
*a waterfillable vessel for receipt of fish and water. The vessel comprises:*
*a bottom*,
*sidewalls*,
*a fish receiving section having an inlet for fish, and*
*at least one outlet.*

*The sidewalls of the vessel is arranged so that they towards the outlet form a channel section, tapering from the fish and water receiving section towards the outlet. The bottom of the vessel is inclining upwards away from the outlet.*

*The apparatus further comprises:*
*a fish conduit connected to the outlet, said fish conduit comprises a siphon bend,* the siphon bend is bending up followed by a bend down and wherein the cross section of the fish conduit in the top of the siphon bend is above the water level in the vessel,
*an air supply conduit arranged for blowing air into the fish conduit in a direction towards the siphon bend and away from the vessel, and*
a *water supply conduit arranged for directing water into the fish conduit in a direction towards the siphon bend and away from the vessel.*

Treatment, handling and/or processing can also be done during the orientation and singularizing of live fish while the fish is in the apparatus.

Water is mentioned at the liquid used with the apparatus during the text. Water can be brine, seawater, fresh water etc. Other types of liquids might also be used in special cases.

The fish receiving section of the vessel can be open in the top so that fish and possibly water can be poured into this section of the vessel.

The bottom of the vessel is inclining up from the outlet towards the fish receiving section so that the outlet is the lowest point inside the vessel. If there is more than one outlet they can be arranged so that all of the them are at about the same level.

If there are two outlets they can be arranged one on each end of the vessel and/or on each side of the fish receiving section and arranged so that the bottom of the vessel is inclining up from the outlets. If more than two outlets the vessel can be formed as a star seen from above or below and with one outlet in each tip of the star-form and with the bottom of the vessel inclining up from the outlets towards the middle of the star form where the fish receiving section is arranged.

The advantage of arranging the outlets(s) at a lower level than the surrounding bottom of the vessel is that fish tends to seek towards the deepest point of the vessel. Hence, the fish tends to end up at an outlet without the need for further means for motivating or forcing the fish towards the outlet.

The sidewalls of the vessel is arranged so that the vessel seen from above is tapering towards the outlet in the channel section of the vessel. Fish swimming towards the outlet (because it is drawn towards a deeper level of the vessel) will find itself swimming into an increasingly narrower channel so before it reaches the outlet it will not be able to turn around and swim back where it came from. Also the channel section will when getting closer to the outlet be so narrow (sideways) that it is most often only room for one fish at the time going through the outlet. Hence, fish is directional oriented and singularized. With other words only one and one fish is entering the outlet and they are entering the outlet with the head first.

The water supply conduit supplies water into the fish conduit and creates a flow of water in the fish conduit away from the outlet/vessel. Since water is supplied inside the conduit a flow of water is established in the fish conduit to move fish with the current without producing a flow field in the vessel. A flow field in the vessel towards the outlet would prevent fish from entering the outlet because fish tends to orient them self against flow/current. Once the fish have entered the fish conduit they can not re-orient them self against the current (since the fish conduit is to narrow) and must therefore follow the flow.

The siphon (also called water seal, or U-bend) is a bend in the fish conduit, first bending up followed by a bend down. The siphon section of the fish conduit will then be at least partly filled with air. Preferably, the whole cross section of the fish conduit in the top of the siphon bend is above the water level in the vessel.

The air conduit is blowing air (preferably pressurized air) towards the siphon bend so that some water and one fish at the time is passing over the bend. The air-filled pocket in the siphon is maintained by the air from the air conduit.

The air blowing in a direction towards the siphon and away from the vessel helps fish and water pass the siphon bend and it also provides a pump-effect so that fish and water after the siphon bend can be lifted to a level higher than the water level of the vessel.

It is experienced that the combination of the air conduit blowing air and the siphon makes the singularizing of the fish more efficient and that it puts some space in between each fish in the conduit after the siphon bend which is an advantage for the following treatment, handling and/or processing of the fish.

*The channel section of the vessel can have a top, and the top and the bottom of the channel section can taper toward each other towards the outlet.*

The advantage of having a top over the channel section of the vessel is that it is also possible to taper the channel section top to bottom towards the outlet. Thus, making it even harder for the fish to turn around and swim back. The top also reduces splashing of water and its not possible for fish to jump out of the channel section as it gets narrower.

*The apparatus can comprise an overflow arranged to maintain a water level in the vessel that is below a predefined maximum water level.*

The advantage of having an overflow is that fish and any water added into the vessel while adding/pouring fish into the vessel will not increase the water level in the vessel. Thus, a constant water level can be kept.

*The invention also relate to a method for singularizing of live fish, prior to treatment, handling and*/*or processing of the fish. The method comprises the steps of:*
- *providing a apparatus* according to claim 1,
- *supplying fish into the fish receiving section of the vessel, wherein said fish will seek head first towards a lower level of the vessel through a channel section of the vessel,*
- *letting the fish exit the vessel one by one through the outlet at the lower level of the vessel and into the fish conduit,*
- *supplying air through the air supply conduit and supply water through the water supply conduit creating a flow of water and air towards the siphon bend of the fish conduit in a direction away from the vessel, and*
- *moving water, air and fish over the siphon bend due to the flow thereby increasing the distance between each of the singularized fishes.*

### Description of the drawings

Fig. 1 shows an embodiment of the apparatus from the side. In this embodiment the apparatus has two outlets.
Fig. 2 shows the same embodiment of the apparatus as in Fig. 1 from below.
Fig. 3 shows the same embodiment of the apparatus as in Fig.1 and Fig. 2 from above.

| **Reference numbers** | |
|---|---|
| 1 | Waterfillably vessel |
| 2 | Outlet (from vessel) |
| 3 | Fish conduit |
| 4 | Siphon bend (arranged as part of the fish conduit) |
| 5 | Water supply conduit |
| 6 | Air supply conduit |
| 7 | Channel section (in the vessel) |
| 8 | Overflow |
| 9 | Bottom (of the vessel) |
| 10 | To the next process/treatment step |
| 11 | Top (of vessel) |
| 12 | Inlet (for pouring in fish and possibly water) |
| 13 | Sidewalls (of the vessel) |
| | |
| 20 | fish receiving section (in the vessel) |
| | |
| 100 | Apparatus (for directional orientation and singularizing of live fish) |
| | |

### Description of preferred embodiments of the invention

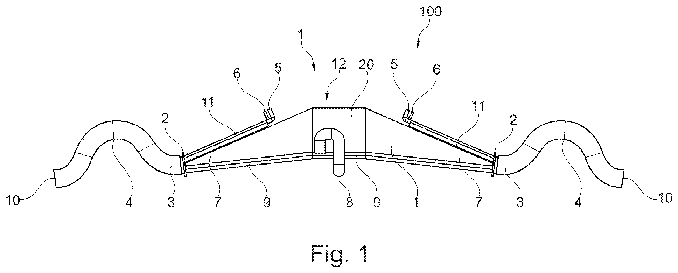

In the following an embodiment of the invention will be described with reference to the drawings (Fig. 1 - 3).

The embodiment of the apparatus 100 depicted in the drawings comprises a waterfillably vessel 1 (hereafter referred to as the vessel 1). The vessel 1 comprises a fish receiving section 20 and two channel sections 7 each leading to an outlet 2. To each outlet 2 a fish conduite 3 is connected to transport fish to a next process step 10 for treatment, handling and/or processing of the fish. Each fish conduit 3 is arranged with a siphon bend 4. Inside the vessel 1 a overflow pipe 8 is arranged to drain water from the vessel 1 if the water level in the vessel 1 reaches the maximum predefined water level.

Further the apparatus 100 comprises at lest one water supply conduit 5 preferably being a pipe. The water supply conduit 5 is arranged with its end inside the fish conduit 3, at the outlet 2 opening or close to the outlet 2 for directing a stream of water into the fish conduit 3.

The apparatus 100 also comprises at lest one air supply conduit 6. The air supply conduit (preferably an air supply pipe or tube) is arranged with its end inside the fish conduit 3, at the outlet 2 opening or close to the outlet 2 for directing a stream of air into the fish conduit 3. Preferably the end/outlet of the air supply conduit 6 is arranged at the bottom of the fish conduit 3 directing air in a direction towards the siphon bend 4 and away from the vessel 1.

As seen in Fig. 1 the outlets 2 are arranged at the deepest/lowest level of the vessel 1. This is because fish tends to seek towards the bottom 9 of such a vessel 1 and will therefore end up at the outlet 2 without any further motivation or need to force the fish towards the outlets 2. Normally, fish and water will be poured into the fish receiving section 20 of the vessel 1 through its open top. The bottom 9 of the vessel 1 is at a higher level in the fish receiving section 20, so fish will then start to swim towards the two outlets 2.

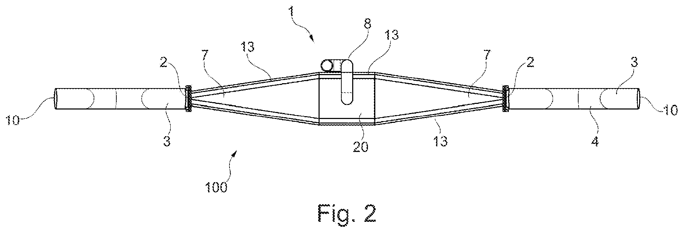

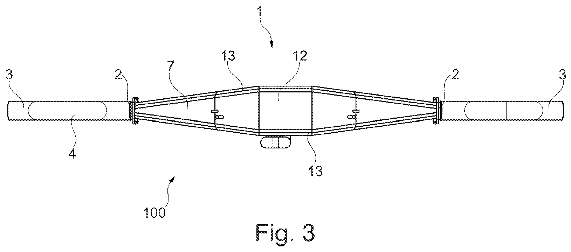

As seen in Fig. 1 the channel section 7 of the vessel 1 which in this embodiment also has a top 11 is tapering towards the outlet 2, i.e. the distance between the top 11 and the bottom 12 of the vessel 1 is decreasing towards the outlet 2. As seen from below (Fig. 2) and from above (Fig. 3) the channel section 7 is also tapering towards the outlet 2 sideways, i.e. the distance between the sidewalls 13 of the vessel 1 is decreasing towards the outlet 2. Since the channel section 7 is tapering towards the outlets 2 the fish will eventually not be able to turn around and swim back where it came from, so the fish will therefor continue into the fish conduit 3. The channel section 7 is eventually so narrow that only one fish at the time can pass into the outlet 2. In the fish conduit 3 the fish will be carried with the current generated by the water supply conduit 5 towards the siphon bend 4.

The air supply conduit 6 arranged inside the fish conduit will direct a stream of air towards the siphon bend 4 and will help to lift fish and water over the siphon bend 4. This also creates a pump-effect that makes it possible to lift water and fish after the siphon bend 4 to a level that is higher than the water level in the vessel 1.

One possible way of using/operating apparatus 100 will be described in the following.

Fish and water is poured into the fish receiving section 20 of the water filled vessel 1 through the open top / inlet 12. Fish will instantly seek towards the outlets 2 because the bottom 9 of the fish receiving section of the vessel 1 is at a higher level than the bottom next to the outlet 2. The bottom 9 is sloping towards the outlets 2.

The fish will be singularized in the channel section 7 towards the outlet 2 and will swim with the head first. Once the fish passes through the outlet 2 and into the fish conduit 3 the fish is no longer able to turn around and will be transported by the current, starting in the fish conduit 3, created by water from the water supply conduit 5.

Once the fish gets closer to the siphon bend 4 air from a pressurized air supply is supplied trough the air supply conduit 6 into the fish conduit 3 so that fish and water is helped passed the siphon bend 4 and if needed the fish and water is lifted to a level higher than the level of the water in the vessel 1. The fish is now transported to further processing and/or treatment.

The overflow 8 drains water from the vessel 1 when the water level increases to above the predefined maximum water level. Thus, maintaining a water level at or below the maximum water level.

## Claims

1. Apparatus (100) for directional orientation and singularizing of live fish, prior to treatment, handling and/or processing of the fish, wherein the apparatus (100) comprises:
a waterfillable vessel (1) for receipt of fish and water, the vessel comprises:
a bottom (9),
sidewalls (13),
a fish receiving section (20) having an inlet (12) for fish, and
at least one outlet (2),
wherein the sidewalls (13) of the vessel (1) are arranged so that they towards the outlet (2) form a channel section (7) tapering from the fish and water receiving section (20) towards the outlet (2), and wherein the bottom (9) of the vessel (1) is inclining upwards away from the outlet (2),
the apparatus (100) further comprises:
a fish conduit (3) connected to the outlet (2), said fish conduit (3) comprises a siphon bend (4), the siphon bend (4) is bending up followed by a bend down and wherein the cross section of the fish conduit (3) in the top of the siphon bend (4) is above the water level in the vessel (1),
an air supply conduit (6) arranged for blowing air into the fish conduit (3) in a direction towards the siphon bend (4) and away from the vessel (1), and
an water supply conduit (5) arranged for directing water into the fish conduit (3) in a direction towards the siphon bend (4) and away from the vessel (1).

2. Apparatus (100) according to claim 1, wherein the channel section (7) of the vessel (1) has a top (11) and the top (11) and the bottom (9) of the channel section (7) is tapering toward each other towards the outlet (2).

3. Apparatus (100) according to claim 1 or 2, wherein the apparatus (100) comprises a overflow (8) arranged to maintain a water level in the vessel (1) that is below a predefined maximum water level.

4. Method for singularizing of live fish, prior to treatment and/or processing of the fish, the method comprises the steps of:
- providing a apparatus (100) according to any of the claim 1-3,
- supplying fish into the fish receiving section (20) of the vessel (1), wherein said fish will seek head first towards a lower level of the vessel (1) through a channel section (7) of the vessel (1),
- letting the fish exit the vessel (1) one by one through the outlet (2) at the lower level of the vessel (1) and into the fish conduit (3),
- supplying air through the air supply conduit (6) and supply water through the water supply conduit (5) creating a flow of water and air towards the siphon bend (4) of the fish conduit (3) in a direction away from the vessel (1), and
- moving water, air and fish over the siphon bend (4) due to the flow thereby increasing the distance between each of the singularized fishes.

## Patentansprüche

1. Vorrichtung (100) zur Richtungsorientierung und Vereinzelung von lebenden Fischen vor der Behandlung, Handhabung und/oder Verarbeitung der Fische, wobei die Vorrichtung (100) Folgendes umfasst:
einen mit Wasser befüllbaren Behälter (1) zum Aufnehmen von Fischen und Wasser, wobei der Behälter Folgendes umfasst:
einen Boden (9),
Seitenwände (13),
einen Fischaufnahmeabschnitt (20) mit einem Einlass (12) für Fische und
mindestens einen Auslass (2),
wobei die Seitenwände (13) des Behälters (1) so angeordnet sind, dass sie in Richtung des Auslasses (2) einen Kanalabschnitt (7) bilden, der sich von dem Fisch- und Wasser-Aufnahmeabschnitt (20) in Richtung des Auslasses (2) verjüngt, und wobei der Boden (9) des Behälters (1) von dem Auslass (2) weg nach oben geneigt ist, wobei die Vorrichtung (100) ferner Folgendes umfasst:
eine mit dem Auslass (2) verbundene Fischleitung (3), wobei die Fischleitung (3) eine Siphonbiegung (4) umfasst, wobei die Siphonbiegung (4) nach oben gebogen ist, gefolgt von einer Biegung nach unten, und wobei der Querschnitt der Fischleitung (3) an der Oberseite der Siphonbiegung (4)
über dem Wasserstand in dem Behälter (1) liegt, eine Luftzufuhrleitung (6), die angeordnet ist, um Luft in die Fischleitung (3) in Richtung der Siphonbiegung (4) und weg von dem Behälter (1) zu blasen, und eine Wasserzufuhrleitung (5), die angeordnet ist, um Wasser in die Fischleitung (3) in Richtung der Siphonbiegung (4) und weg von dem Behälter (1) zu leiten.

2. Vorrichtung (100) nach Anspruch 1, wobei der Kanalabschnitt (7) des Behälters
(1) eine Oberseite (11) aufweist und die Oberseite (11) und der Boden (9) des Kanalabschnitts (7) sich zu dem Auslass (2) hin gegenseitig verjüngen.

3. Vorrichtung (100) nach Anspruch 1 oder 2, wobei die Vorrichtung (100) einen Überlauf (8) umfasst, der angeordnet ist, um einen Wasserstand in dem Behälter (1) aufrechtzuerhalten, der unter einem vordefinierten maximalen Wasserstand liegt.

4. Verfahren zur Vereinzelung von lebenden Fischen vor der Behandlung und/oder Verarbeitung der Fische, wobei das Verfahren die folgenden Schritte umfasst:
- Bereitstellen einer Vorrichtung (100) nach einem der Ansprüche 1 bis 3,
- Zuführen von Fischen in den Fischaufnahmeabschnitt (20) des Behälters (1), wobei die Fische mit dem Kopf voran durch einen Kanalabschnitt (7) des Behälters (1) zu einem tiefer gelegenen Bereich des Behälters (1) schwimmen,
- Entlassen der Fische einzeln aus dem Behälter (1) durch den Auslass (2) in dem unteren Bereich des Behälters (1) in die Fischleitung (3),
- Zuführen von Luft durch die Luftzufuhrleitung (6) und Zuführen von Wasser durch die Wasserzufuhrleitung (5), wodurch ein Strom von Wasser und Luft in Richtung der Siphonbiegung (4) der Fischleitung (3) in einer Richtung weg von dem Behälter (1) erzeugt wird, und
- Bewegen von Wasser, Luft und Fischen über die Siphonbiegung (4) aufgrund des Stroms, wodurch der Abstand zwischen den einzelnen Fischen vergrößert wird.

## Revendications

1. Appareil (100) pour l'orientation directionnelle et la singularisation de poissons vivants, avant le traitement, la manipulation et/ou la transformation des poissons, dans lequel l'appareil (100) comprend :
un récipient remplissable d'eau (1) pour recevoir des poissons et de l'eau, le récipient comprend :
un fond (9),
des parois latérales (13),
une section de réception des poissons (20) comportant une entrée (12) pour les poissons, et
au moins une sortie (2),
dans lequel les parois latérales (13) du récipient (1) sont disposées de manière à ce qu'elles soient orientées vers la sortie
(2) forment une section de canal (7) s'amincissant de la section de réception des poissons et de l'eau (20) vers la sortie (2), et dans lequel le fond (9) du récipient (1) est incliné vers le haut en s'éloignant de la sortie (2), l'appareil (100) comprend en outre :
un conduit à poissons (3) relié à la sortie (2), ledit conduit à poissons (3) comprend un coude de siphon (4), le coude de siphon (4) est un coude vers le haut suivi d'un coude vers le bas et dans lequel la section transversale du conduit à poissons (3) dans la partie supérieure du coude de siphon (4)
est au-dessus du niveau de l'eau dans le récipient (1), un conduit d'alimentation en air (6) conçu pour souffler de l'air dans le conduit à poissons (3) en direction du coude de siphon (4) et à l'écart du récipient (1), et un conduit d'alimentation en eau (5) conçu pour diriger de l'eau dans le conduit à poissons (3) en direction du coude de siphon (4) et à l'écart du récipient (1).

2. Appareil (100) selon la revendication 1, dans lequel la section de canal (7) du récipient (1) a une partie supérieure (11) et la partie supérieure (11) et le fond (9) de la section de canal (7) se rétrécissent l'un vers l'autre en direction de la sortie (2).

3. Appareil (100) selon la revendication 1 ou 2, dans lequel l'appareil (100) comprend un trop-plein (8) conçu pour maintenir un niveau d'eau dans le récipient (1) inférieur à un niveau d'eau maximal prédéfini.

4. Procédé de singularisation de poissons vivants, avant le traitement et/ou la transformation des poissons, le procédé comprend les étapes suivantes :
- fournir un appareil (100) selon l'une quelconque des revendications 1 à 3,
- fournir des poissons dans la section de réception des poissons (20) du récipient (1), dans lequel lesdits poissons se dirigent la tête la première vers un niveau inférieur du récipient (1) à travers une section de canal (7) du récipient (1),
- laisser les poissons sortir un par un du récipient (1) par la sortie (2) au niveau inférieur du récipient (1) et dans le conduit à poissons (3),
- fournir de l'air par le conduit d'alimentation en air (6) et fournir de l'eau par le conduit d'alimentation en eau (5) créant un flux d'eau et d'air vers le coude de siphon (4) du conduit à poissons (3) dans une direction opposée au récipient (1), et
- déplacer l'eau, l'air et les poissons sur le coude de siphon (4) sous l'effet du flux, augmentant ainsi la distance entre chacun des poissons singularisés.
